# EUROPEAN PATENT SPECIFICATION

(11) **EP 1 670 640 B1**
(45) Date of publication and mention of the grant of the patent: **12.11.2008**
(21) Application number: 04794700.7
(22) Date of filing: 07.10.2004
(51) Int. Cl.: B32B 27/32

(54) **MULTI-LAYER SHEET COMPRISING AN IONOMER LAYER**
MEHRLAGIGE FOLIE MIT EINER IONOMERLAGE
FEUILLE MULTICOUCHE COMPRENANT UNE COUCHE D'IONOMERE

(30) Priority: 07.10.2003 US 509438 P
(43) Date of publication of application: 21.06.2006
(73) Proprietor: E.I. DU PONT DE NEMOURS AND COMPANY, Wilmington, DE 19898 (US)
(72) Inventor: VOGEL, Randall, Allen, Wilmington, Delaware 198 (US); SMILLIE, Benjamin, Andrew, Kingston, Ontario K7M 3N7 (CA); LEBOEUF, Christian, Kingston, Ontario K7M 3N7 (CA)
(74) Representative: Heinemann, Monica
(86) International application number: PCT/US2004/033425
(87) International publication number: WO 2005/035246

(56) References cited:
- EP-A- 1 044 804
- US-A- 5 462 807

## Description

### BACKGROUND OF THE INVENTION

This invention is directed to a multi-layer sheet such as a multi-layer sheet film that has an ionomer surface layer and an adhesive layer of a metallocene very low density polyethylene that provides improved adhesion in particular to a polypropylene substrate layer.

A wide variety of multi-layer sheet structures, film and laminates can be made with ionomer resins that form a top layer or outer layer of ionomer that has excellent properties, such as scuff and mar resistance, high gloss, durable, weatherable and other desirable properties. One problem has been that the ionomer resin is difficult to adhere to another substrate such as a backing or reinforcing layer and obtain a high level of adhesion. One particularly desirable material for the backing or reinforcing layer is polypropylene, co-polymers of polypropylene and blends of polypropylene and other polymers. It would be desirable to be able to form a multi-layer sheet structure having an ionomer resin outer layer and a polypropylene backing or reinforcing layer wherein the ionomer layer has a high level of adhesion to the polypropylene layer.

WO 02/066249 published August 29, 2001, is directed to co-extruded pigment/clear coated polymeric coatings for articles such as automotive exterior body panels.

US 5,462,807 describes bilayered filers formed by heat sealing comprising a layer containing an ionomer and a polymeric layer formed from metallocene catalyzed LLDPE.

Japanese Kokai Patent Application SHO 58[1983}-155953 published September 16, 1983 shows molded polyolefin resin laminates having a base layer of a polyolefin resin and a surface layer of a metal salt of an ethylene-α, β-unsaturated carboxylic acid copolymer but such a laminate does not have, for example, the durability, such as scratch mar and scuff resistance required for exterior automotive and truck panels and parts. In addition, weather durability of a pigmented surface layer would be expected to be significantly inferior to a clear layer over a colored layer.

The invention includes a metallocene-catalyzed very low density polyethylene (m-VLDPE) adhesive layer to form the multi-layer sheet material that has the desired high level of adhesion between the ionomer resin layer(s) and the polypropylene backing or reinforcing layer and forms laminates that can be used for automobile, truck and recreational vehicles panels and parts and as a basic sheet material useful in a number of laminates and for films used for a wide variety of end uses.

### SUMMARY OF THE INVENTION

A multi-layer sheet comprising or produced from
a. a first co-extruded clear polymeric layer comprising an ionomer resin of a copolymer of ethylene and 8 - 25% by weight, based on the weight of the copolymer, of a C₃-C₈ α,β ethylenically unsaturated monocarboxylic acid, wherein at least 35% of the acid moieties are neutralized with metal ions;
b. optionally, a second co-extruded polymeric layer selected from the group of an ionomer resin, an ethylene acid copolymer, an ethylene copolymer, an ethylene acid terpolymer, or a metallocene catalyzed very low density polyethylene, or combinations of two or more thereof; and
c. another co-extruded polymeric adhesive layer comprising a metallocene catalyzed very low density polyethylene;
wherein at least one of the second co-extruded polymeric layer and the polymeric adhesive layer comprising the metallocene catalyzed very low density polyethylene contains one or more additives selected from the group consisting of pigments, dyes and flakes.

The invention also comprise a multi-layer where the second layer is replaced with the m-VLDPE and can contain pigments, dyes and other additives and be directly co-extruded with the thermoformable polymer layer to form a three-layered structure. The invention also comprise a two-layered the second layer is m-VLDPE directly co-extruded with the first layer and can contain pigments, dyes and other additives.

The invention also comprises
a. a first co-extruded layer comprising an ionomer resin of ethylene having a co-monomer content between 8-25% by weight, based on the weight of the copolymer, of a C₃-C₈ α,β ethylenically unsaturated mono-carboxylic acid with at least 35% of the acid moieties neutralized with metal ions, preferable, a mixture of metal ions to provide enhanced surface properties to the polymeric layer;
b. a second co-extruded layer selected from an ionomer resin, an ethylene acid polymer, an ethylene copolymer, an ethylene acid terpolymer, a metallocene catalyzed very low density polyethylene (m-VLDPE), or combinations of two or more thereof; and contains pigments, dyes, flakes, additives, or two or more thereof; and
c. a third co-extruded adhesive layer in contact with the second co-extruded layer of metallocene catalyzed m-VLDPE; and
d. optionally, at least one additional co-extruded fourth thermoformable polymeric layer or backing layer, for example, polypropylene, co-polymers of polypropylene, random polymers of polypropylene, blends polypropylene and other polyolefins that is in contact with and adhered to the third co-extruded layer.

Any of the above structures can be thermoformed and cladded with an appropriate engineering resin that has an acceptable level of adhesion to the backing layer to form parts and panels for automobiles, trucks and recreational vehicles. Also, the above two-, three- or four-layer structures can be laminated to another thermoplastic resin to form films or laminates that have a wide variety of end uses.

### DETAILED DESCRIPTION OF THE INVENTION

Certain features of the invention, which are, for clarity, described above and below in the context of separate embodiments, may also be provided in combination in a single embodiment. Conversely, various features of the invention that are, for brevity, described in the context of a single embodiment, may also be provided separately or in any subcombination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both preceded by the word "about." In this manner, slight variations above and below the stated ranges can be used to achieve substantially the same results as values within the ranges. Also, the disclosure of these ranges is intended as a continuous range including every value between the minimum and maximum values.

For purposes of this invention the following terms are defined:
"(Meth)acrylic acid" means acrylic acid and methacrylic acid and the term "(meth)acrylate means acrylate and methacrylate.
"Consisting essentially of" means that the components recited are essential, while smaller amounts of other components may be present to the extent that they do not detract from the operability of the invention.
"Distinctness of Image" or "DOI" is a measure of the "degree of definition" of a reflection of an object in a colored finish compared to the actual object itself. DOI is defined in ASTM Standard-284 as: distinctness-of-image-gloss, n-aspect of gloss characterized by the sharpness of images of objects produced by reflection at a surface. DOI can be measured with a BYK-Gardner Wavescan DOI instrument. In the automotive industry, satisfactory finishes on a smooth or "Class A" surface typically can have a DOI value of at least 60 and preferably, 80 or higher.
"Gloss" is defined in ASTM Standard-284 as, n-angular selectivity of reflectance, involving surface reflected light, responsible for the degree to which reflected highlights or images of objects may be superimposed on a surface.
"Melt Index" (MI) of a polymer is determined by ASTM D 1238 using condition E (2190g, 190°C).
"Haze" is defined in ASTM Standard-284 as: n-scattering of light at the glossy surface of a specimen responsible for the apparent reduction in contrast of objects viewed by reflection from the surface.
"Class A surface" is a surface that by itself has a DOI and gloss reading of at least 80 and 90.

The multi-layer sheet material has a high level of adhesion between the ionomer layer and the backing layer which can be polypropylene, co-polymers of polypropylene, random co-polymers of polypropylene, blends polypropylene and other polyolefins. The high adhesion level is provided by the m-VLDPE layer in the sheet material. A wide variety of structures can be formed from the novel sheet material, such as laminates, thin films, for example, useful for packaging, molded articles that are cladded with resins, such as polypropylene, co-polymers of polypropylene, blends of polypropylene, and polyethylene, polyethylene copolymers and blends of polyethylenes, and other polyolefins and the like useful for automotive and truck parts and panels and for parts and panels for recreational vehicles. Structures and laminates can be formed by conventional thermal and extrusion lamination and compression or injection molding.

Packaging films of the novel multi-layer sheet material can be economical since the adhesive layer of m-VLDPE is a clear resin readily co-extrudable with the ionomer top layer(s) and the backing layer, and is generally of a lower cost than conventional adhesives that are used for such purposes. Laminates used, for example, to form pouches use the m-VLDPE as the adhesive layer between the ionomer exterior layer and the backing layer such as a polypropylene resin or polyethylene resin. Coinjected molded articles that have an ionomer resin as the surface layer utilize the relatively low cost m-VLDPE as the adhesive layer to adhere a backing layer that can be injection cladded.

The multi-layer sheet material comprises a first co-extruded layer of an ionomer resin that preferably is manufactured to have higher crystallinity, and is a copolymer of ethylene and a co-monomer with the co-monomer content being between 8-25% by weight, based on the weight of the copolymer, of a C₃-C₈ α,β ethylenically unsaturated mono-carboxylic acid at least 35% of the acid moieties neutralized with metal ions.

This layer can be clear and may contain pigments that are transparent or have the same refractive index as the ionomer resin making the layer appear clear and may contain one or more UV absorbers and stabilizers and other additives and mixtures thereof, if it is exposed to UV light and weather. This clear layer provides parts, panels, and laminates that have scratch and mar resistant with higher temperature resistance, weatherability and other desirable properties required of such products.

The second co-extruded polymeric layer of the sheet can be a colored or pigmented layer containing pigments, dyes, flakes, such as aluminum flake, other additives and mixtures thereof. An ionomer resin can be used for this pigmented layer. The ionomer resin used in the clear and pigmented layers preferably is the same resin or a very compatible ionomer resin for the second layer and has good inter-layer adhesion. If different resins are used in the clear layer and the pigmented layer, the resins are preferably compatible in processing and have adequate inter-layer adhesion. Other resins that can be used are ethylene acid copolymers, such as ethylene/acrylic acid and ethylene/methacrylic acid copolymers; ethylene copolymers, ethylene/acid terpolymers, such as ethylene/vinyl acetate/acrylic acid polymers, ethylene/(meth)acrylic acid/alkyl(meth)acrylate polymers having 2-12 carbon atoms in the alkyl group, like, ethylene/acrylic acid/butyl acrylate polymers. A metallocene catalyzed m-VLDPE can be used. One particularly suitable m-VLDPE is EXACT^{®} 8201, an octene ethylene co-polymer having a density of 0.88g/cm³ made by Exxon Mobile Corporation. Also, ethylene/vinyl acetate copolymers and ethylene methylacrylate copolymers can be used. The polymer used in this layer can process satisfactorily with the clear layer and any adhesive layer and have adequate interlayer adhesion. The second layer can contain the pigment and provide adhesion to backing or cladding materials if the 2^{nd} layer is for instance composed of the mVLDPE.

The third co-extruded polymeric layer that is in contact with the second colored layer can be an adhesive layer that bonds the colored layer to the backing layer. A metallocene-catalyzed m-VLDPE can be used for this layer to provide a high level of adhesion. EXACT^{®} 8201, disclosed above, is one preferred polymer.

The fourth co-extruded layer can be any of a variety of polypropylenes, co-polymers of polypropylene, random co-polymers of polypropylene, blends of polypropylene, and polyethylene, polyethylene copolymers and blends of polyethylenes and other polyolefins to provide the sheet with properties that are needed for its end use, for example, stiffness and rigidity to the sheet so that it can be thermoformed.

A variety of two and three layer structures can also be formed depending on the end use that is to be made of the product. For example, a two layer structure can be formed wherein the clear layer is an ionomer resin and the second layer is m-VLDPE which contain pigments, flakes, dyes and other additives and can provide adhesion to a third layer, such as, a polypropylene which can be a cladding layer or a thin layer to form a laminate or a film. A three layer structure can be formed with the ionomer resin as the clear layer, m-VLDPE as the second layer that contains pigments, flakes, dyes and other additives and a third backing layer of polypropylene, co-polymers of polypropylene, random co-polymers of polypropylene, blends of polypropylene, and polyethylene, polyethylene copolymers and blends of polyethylenes and other polyolefins which can be cladded with another compatible polymeric material to form parts and panels and laminates.

The four-layer sheet material typically can have an 80-450 micron (µ) thick first polymeric clear layer, 80-600 µ thick second polymeric pigmented layer and 40-500 µ thick third m-VLDPE adhesive layer and a 100-800 µ thick fourth layer with a total thickness of about 300-1600µ. In forming a part, the novel sheet material is thermoformed and then cladded with a relatively thick layer of compatible engineering polymer to provide the resulting part with the desired stiffness and handling ability. Typically, the cladding layer may be 800-4000 µ thick depending on the design of the part or panel which may be for autos, trucks, garden equipment and the like.

### First Co-extruded Polymeric Layer - lonomer Resin

The ionomer resin used for the surface of the multi-layer sheet material of this invention (the first co-extruded polymeric layer) can be prepared by conventional polymerization techniques well known to one skilled in the art and neutralized with metal ions such as zinc, sodium, lithium, magnesium, calcium and any mixtures thereof and form a surface layer that has excellent scratch and mar resistance and sufficient temperature resistance. Useful ionomers can have an acid mole content above 0.7%, neutralization of the acid functional groups to a level greater than 40% and a MI (Melt Index) of less than 5 and preferably in the range of 0.4 - 4.0.

The ionomers can be derived from direct copolymers of ethylene and a C₃-C₈ α, β-ethylenically unsaturated mono-carboxylic acid (ethylene acid copolymer) that is at least 35% neutralized with metal ions. "Direct copolymer" means that the copolymer is made by polymerization of monomers together at the same time, as distinct from a "graft copolymer" where a monomer is attached or polymerized onto an existing polymer chain. Methods of preparing such ionomers are well known and are described in US 3,264,272. Preparation of the direct ethylene-acid copolymers on which the ionomers are based is described in US 4,351,931. Ethylene-acid copolymers with high levels of acid are difficult to prepare in a continuous polymerization because of monomer-polymer phase separation. This difficulty can be avoided however by use of "co-solvent technology" as described in US 5,028,674 or by employing higher pressures than those at which copolymers with lower acid can be prepared.

The ethylene-acid copolymers used to make the ionomeric copolymer of this invention can be copolymers of ethylene and C₃-C₈ α, β-ethylenically unsaturated mono-carboxylic acid, particularly acrylic or methacrylic acid. Preferred ethylene-acid copolymers are ethylene/acrylic acid and ethylene/methacrylic acid.

The ethylene-acid copolymers used to make the ionomer copolymers of this invention can have the acid moiety present in a high amount. The amount that is considered as "high" depends on which acid moiety is employed, particularly the molecular weight of the acid moiety. In the case of ethylene/(meth)acrylic acid, the preferred acid level is 10 to 25, (or 10-18, preferably 12-16) wt.% based on the weight of the copolymer. Particularly in view of the disclosures herein, one skilled in the art can determine the "high" acid levels for other acid moieties and levels of acid neutralization with metal cations, that are needed to get the desired gloss levels and abrasion resistance. Useful ethylene acid copolymers comprise 12-18% by weight, based on the weight of the copolymer, of methacrylic acid or 10-15% by weight, based on the weight of the copolymer of acrylic acid. Particularly useful acid copolymer are ethylene/12.5% acrylic acid and ethylene/15% methacrylic acid. Generally, if the acid level of the copolymer is increased transition temperatures are lowered while the available acid moieties for neutralizing increase. Higher levels of neutralization (acid level times neutralization extent) improve hardness and mar resistance. A proper balance of acid level is therefore necessary to balance surface mar and temperature resistance.

The neutralizing moiety is preferably metal cations, particularly monovalent and/or bivalent metal cations. It is preferable to neutralize with metal cations. Preferred metal cations include sodium, zinc, lithium, magnesium and calcium or a combination of such cations. A combination of zinc and sodium is most preferred.

The preferred level of neutralization can depend on the ethylene-acid copolymers employed and the properties desired. Neutralization can be sufficient to raise the scratch/mar resistance and hardness to satisfactory levels. The percent neutralization of the acid groups can be 35% or greater, preferably, 35 to 75%. The level of acid and the degree of neutralization can be adjusted to achieve the particular properties desired. Higher neutralization yields harder products while more moderate neutralization yields tougher products.

The ionomer may also contain components such as, ultraviolet (UV) light stabilizers, UV absorbers, antioxidants and thermal stabilizers, clear pigments, fillers, anti-slip agents, plasticizers, nucleating agents, and the like. Preferably, these components are present in amounts of about 0.5 to about 3.0 (preferably, about 1.0 to about 2.0) parts per hundred parts by weight of the ionomer but may be present in lower or higher levels.

### Second Co-extruded Polymeric Layer

The layer can be a colored or pigmented layer containing pigments, dyes, flakes, such as aluminum flake, other additives and mixtures thereof. An ionomer resin can be used for this pigmented layer. The ionomer resin used in the pigmented layer can be any of those described above for the first clear layer and preferably, the same resin or a very processing compatible ionomer resin is used to insure that there is good inter-layer adhesion between the first and second layers.

If two different resins are used in the clear layer and the pigmented layer, the resins are preferably compatible in processing and have adequate inter-layer adhesion. Adequate interlayer adhesion for exterior panels is better defined as a peel strength in a 90 degree pull of the adhesive layer from either the ionomer layer or backing layer. Adhesive force in a 90 degree pull of an 2.5 cm (1 inch) strip should be above 5000 grams. Other resins that can be used for this pigmented layer are ethylene acid copolymers, such as ethylene/acrylic acid and ethylene methacrylic acid copolymers; ethylene/acid terpolymers, such as ethylene/vinyl acetate/acrylic acid polymers, ethylene/(meth)acrylic acid/alkyl(meth)acrylate polymers having 2-12 carbon atoms in the alkyl group, like ethylene/acrylic acid/butyl acrylate polymers. A metallocene catalyzed very low density polyethylene (m-VLDPE) can be used. Also, ethylene/vinyl acetate or ethylene methacrylate copolymers can be used. The polymer used in this layer is preferably processible not only with the clear layer but with the adhesive layer.

### Co-extruded Metallocene-catalyzed m-VLDPE Layer

The second or third co-extruded polymeric layer can provide adhesion to the first or second pigmented co-extruded polymeric layer and to the backing layer. Metallocene-catalyzed m-VLDPE can be used to provide a high level of adhesion between an ionomer layer and a polypropylene layer especially a random copolymer of polypropylene. Metallocene VLDPE also provide a high level of adhesion to polyethylene and polyethylene copolymers.

The third co-extruded polymeric layer can also contain pigments and flake to improve color appearance. Additives to protect against light degradation can also be added.

These m-VLDPEs can be made using conditions well known in the art for continuous polymerization. Typically polymerization temperatures of 0-250°C and pressures from atmospheric to 1000 atmospheres (110 MPa) are used. Suspension, solution, slurry, gas phase or other polymerization methods can be used. A support for the catalyst can be used but preferably the catalysts are used in a homogeneous (soluble) manner. Suitable process conditions and catalysts that can be used to form the metallocene catalyzed polyethylenes used in this invention are disclosed in US Patent 5,324,800; US 5,278,272; US 5,272,236; US 5,405,922; and US 5,198,401. The particular preferred m-VLDPE can have a density of 0.86 to 0.91 g/cm³ and a MI of 0.5-4.0 g/10 min measured in accordance with ASTM D1238, for example, EXACT^{®} 8021 ethylene octene copolymer from Exxon Mobile Chemical Corporation.

### Other Components

Additives normally compounded into plastics or added to coating compositions may be included in the first and second co-extruded polymeric layer as required for the end use of the resulting product that is formed, i.e., automotive or truck part or panel or laminates or films. These requirements and the additives needed to meet these requirements are well known to those skilled in the art. Typical of the materials that are needed are, for example, UV absorbers, UV hindered amine light stabilizers, antioxidants and thermal stabilizers, processing aids, pigments and the like. When included, these components are preferably present in amounts of about 0.5 to about 3.0 (preferably about 1.0 to about 2.0) parts per hundred parts by weight of the polymeric material but may be present in lower or higher amounts.

If the part is to be exposed to UV light, it is preferred the inclusion of one or more UV stabilizers and/or absorbers for the ionomer. Typical UV stabilizers are hindered amine light stabilizers, such as bis(1,2,2,6,6 pentamethyl-4-piperidinyl sebacate) and di[4(2,2,6,6,tetramethyl piperidinyl)]sebacate, poly[[6-[1,1,3,3-tetramethylbutyl]amino-s-triazine-2,4-diyl][(2,2,6,6-tetramethyl-4-piperidyl)imino] hexamethylene[(2,2,6,6-tetramethyl-4-piperidyl)iminol]], Chimassorb^{®} 2020 1,6-hexanediamine, N,N'-bis(2,2,6,6-tetramethyl 1-4-piperidyl)-, polymer with 2,4,6-trichloro-1,3,5-triazine, reaction products with N-butyl-1-butanamine and N-butyl-2,2,6,6-tetramethyl-4-piperidinamine, Tinuvin^{®} NOR 371, a triazine derivative and any mixtures thereof.

Typically useful UV absorbers can include benzophenones such as hydroxy dodecyloxy benzophenone, 2,4-dihydroxybenzophenone, hydroxybenzophenones containing sulfonic groups and the like; triazoles such as 2-phenyl-4-(2',2'-dihydroxylbenzoyl)-triazoles; substituted benzothiazoles such as hydroxyphenylthiazoles and the like; triazines, such as, 3,5-dialkyl-4-hydroxyphenyl derivatives of triazine, sulfur containing derivatives of dialkyl-4-hydroxy phenyl triazines, hydroxy phenyl-1,3,5-triazine and the like; benzoates, such as, dibenzoate of diphenylol propane, tertiary butyl benzoate of diphenylol propane and the like; and others, such as, lower alkyl thiomethylene containing phenols, substituted benzenes such as 1,3-bis-(2'-hydroxybenzoyl)benzene, metal derivatives of 3,5-di-t-butyl-4-hydroxy phenyl proprionic acid, asymmetrical oxalic acid, diarylarides, alkylhydroxy-phenyl-thioalkanoic acid ester, and hindered amines of bipiperidyl derivatives.

Preferred UV absorbers and hindered amine light stabilizers, all available from Ciba Specialty Chemicals, are TINUVIN^{®}.234 (2-(2H-benzotriazol-2-yl)-4,6-bis(1-methyl-1-phenylethyl)phenol), TINUVIN^{®} 327 (2-(3',5'-di-tert-butyl-2'-hydroxyphenyl)-5 chlorobenzotriazole), TINUVIN^{®} 328 (2-(2'hydroxy-3',5'-di-tert-amylphenyl)benzotriazole), TINUVIN^{®} 329 (2-(2'-hydroxy-5'-tert-octylphenyl)benzotriazole), TINUVIN^{®} 765 (bis(1,2,2,6,6-pentamethyl-4-piperidinyl)sebacate), TINUVIN^{®} 770 (bis(2,2,6,6-tetramethyl-4-piperidinyl) decanedioate), and CHIMASSORB^{®} 944 (N,N-bis(2,2,6,6-tetramethyl-4-piperidinyl)-1,6-hexanediamine polymer with 2,4,6-trichloro-1,3,5-triazine and 2,4,4-trimethyl-1,2-pentanamine.

Preferred thermal stabilizers, all available from Ciba Specialty Chemicals include IRGANOX^{®} 259 (hexamethylene bis(3,5-di-tert-butyl-4-hydroxyhydrocinnamate), IRGANOX^{®} 1010 (3,5-bis(1,1-dimethylethyl)-4-hyroxybenzenepropanoic acid, 2,2-bis[[3-[3,5-bis(1,1-dimethylethyl)-4-hydroxyphenyl]-1-oxopropoxy]methyl]1,3-propanediyl ester), IRGANOX^{®} 1076 (octadecyl 3,5-di-tert-butyl-4-hydroxyhydrocinnamate), Iragnox^{®} 1098 (N,N-hexamethylene bis(3,5-di-tert-butyl-4-hydroxyhydrocinnamamide), IRGANOX^{®} B215 (33/67 blend of IRGANOX^{®} 1010 with tris(2,4-di-tert-butylphenyl)phosphite), IRGANOX^{®} B225 (50/50 blend of IRGANOX^{®} 1010 with tris(2,4-di-tert-butylphenyl)phosphite), and IRGANOX^{®} B1171 (50/50 blend of IRGANOX^{®} 1098 with tris(2,4-di-tert-butylphenyl)phosphite).

Pigments can include both clear pigments, such as inorganic siliceous pigments (silica pigments, for example) and conventional pigments. Conventional pigments include metallic oxides, such as, titanium dioxide, and iron oxide; metal hydroxides; metal flakes such as aluminum flake; chromates, such as, lead chromate; sulfides; sulfates; carbonates; carbon black; silica; talc; china clay; phthalocyanine blues and greens, organo reds; organo maroons and other organic pigments and dyes. Particularly preferred are pigments that are stable at high temperatures. Pigments are generally formulated into a millbase by mixing the pigments with a dispersing resin that may be the same as or compatible with the material into which the pigment is to be incorporated. Pigment dispersions are formed by conventional means such as sand grinding, ball milling, attritor grinding or two-roll milling. Other additives, while not generally needed or used, such as fiber glass and mineral fillers, anti-slip agents, plasticizers, nucleating agents, and the like, can be incorporated.

### Backing Layer or Fourth Co-extruded Polymeric Material

The backing layer or fourth co-extruded polymeric material can be any of a variety of polymers that provide the necessary backing stiffness and properties required to which the third polymeric layer can adhere. Typically useful are polypropylene, co-polymers of polypropylene, random polymers and co-polymers of polypropylene, blends of polypropylenes, and polyethylene, polyethylene copolymers and blends of polyethylenes and other polyolefins, and the like.

Cladding Polymeric Material. In the formation of a part, panel or laminate from the novel multi-layer sheet material, a cladding material can be any of the aforementioned materials used in the fourth layer provided the materials are processible and provide a high level of adhesion. Typically useful cladding materials are polypropylene, co-polymers of polypropylene, blends of polypropylenes, and polyethylene, polyethylene copolymers and blends of polyethylenes, and other polyolefins, random polymers and co-polymers of polypropylene and other high modulus resins that are compatible and form an excellent adhesive bond between the sheet material and the resin that are conventionally used in the manufacture of parts, panels laminates that are used, for example, in autos, trucks and recreational vehicles.

### Method of Preparation of the Multi-layer Sheet Material

The sheet material can be made using melt co- extrusion processes known to those skilled in the art. The sheet material can be formed by charging each of the polymer components for the various layers of the sheet material into separate extruders. Each component is melted and pumped through a pipe into a feed block that layers the different flows together just prior to entering an extrusion die manifold as a single flow stream. A molten curtain of multiple layers exits the extrusion die and is deposited onto a moving roll which transfers the cooling multi-layer sheet material into a counter rotating moving roll through a gap or nip and then typically to a third cooling roller and subsequently through a take-off system to another nip between two rollers which pulls the sheet through the take-off system. The above arrangement provides a consistent finish to the sheet that has high gloss and forms a sheet having a uniform thickness. It is preferred that during the process the sheet material is subjected to a relatively high pressure that can be generated, for example, in the nip of two rollers to insure a high level of adhesion between the layers.

Parts, laminates and films formed with the sheet material of this invention with the addition of standard UV stabilizers and other additives are surprisingly weatherable and particularly stabile when exposed to ultraviolet light for extended periods of time.

The following examples illustrate various aspects of the invention. All parts and percentages are on a weight basis unless otherwise indicated.

### EXAMPLES

The examples below demonstrate the effectiveness of m-VLDPE resin to provide good adhesion to an adjacent ionomer during multi-layer co-extrusion where the m-VLDPE is both the ionomer tie layer and the backing layer in the sheet structure. Subsequently, the m-VLDPE tie/backing layer develops good adhesion to a polypropylene layer that is cladded onto the three-layer film structure through injection molding.

In all cases the sheet has the nominal layer thickness of

| | | |
|---|---|---|
| 0.13mm | (5mils) | Clear Coat Layer C |
| 0.31mm | (12 mils) | Color Layer B |
| 0.33mm | (13mils) | Tie/Backing Layer A |

In the example structures, the clear coat layer was comprised of SUR SG770BR. The composition is a pellet mixture of 92.8 wt % Base resin SURRX85 (E / 12% acrylic acid, approximately 83 MI) 7.2 wt% SURCS8728 (zinc oxide concentrate, 45wt% ZnO) which is further neutralized with 3.0 wt% (weight percent based on total of above) of 50% NaOH solution. The control method is to adjust the caustic to achieve a melt index of 0.9 dg/min. This results in a resin with overall ion levels 0.85 wt% Na 3.2 wt% ZnO (or 2.57 wt% as Zn). To the SUR SG770BR clear coat layer antioxidants and UV stabilizers were added.

In the following Table 1, the nominal composition of the top clear coat layer C in the five example structures are given.

**Table 1 - Composition of Top layer (C layer)¹**

| Top Layer C | Surlyn^{®} BR 770 | Tin371 | T328 | Cya1164 | I168 | I1076 | Ch2020 |
|---|---|---|---|---|---|---|---|
| 8UV1-24 | 98.1% | 1.2% | | 0.6% | 0.05% | 0.0025% | |
| 8UV1-25 | 98.1% | | 0.6% | | 0.05% | 0.0025% | 1.2% |
| 8UV1-26 | 98.1% | 1.2% | | 0.6% | 0.05% | 0.0025% | |
| 8UV1-27 | 98.1% | 1.2% | | 0.6% | 0.05% | 0.0025% | |
| 8UV1-28 | 98.1% | 1.2% | | 0.6% | 0.05% | 0.0025% | |

| | | | | | | | |
|---|---|---|---|---|---|---|---|
| ¹ Tin 371 refers to Tinuvin® 371; T 328 refers to Tinuvin^{®} 328; Cya 1164 refers to Cyasorb^{®}1164; 1168 refers to Irgafos^{®}168; 11076 refers to Irganox^{®}; and Ch2020 refers to Chimasorb^{®} 2020. All were obtained from Ciba Specialty Chemicals. | | | | | | | |

The nominal composition of the colored ionomer layers (B layers) in example films is shown in Table 2. The ionomer resin in all cases was Surlyn^{®} 1706 a 0.65 MI, zinc neutralized ethylene/methacrylic acid copolymer.

**Table 2^{a}**

| B layers | Surlyn^{®} | Tin371 | T328 | Cya1164 | I168 | I1076 | Other (weight %) |
|---|---|---|---|---|---|---|---|
| 8UV2-24 | 97.2% | 0.5% | | 0.3% | 0.02% | 0.01% | 0.056^{d} |
| 3UV2-25 | 93.6% | | 0.3% | | 0.02% | 0.01% | 0.5%^{b}, 0.07968^{g}, 0.00035^{h} |
| 8UV2-26 | 95.8% | 0.5% | | 0.3% | 0.02% | 0.01% | 0.02^{c} |
| 8UV2-27 | 91.2% | 0.5% | | 0.3% | 0.02% | 0.01% | 0.01757^{d}, 0.082^{h}, 0.00426^{e}, 0.00416^{f} |
| 8UV2-28 | 97.2% | 0.5% | | 0.3% | 0.02% | 0.01% | 0.02^{h} |

| | | | | | | | |
|---|---|---|---|---|---|---|---|
| ^{a} See footnotes in Table 1. ^{b} Ch2020 as illustrated in Table 1. ^{c} DPP Red 2030 -refers to Irgazin^{®} Red 2030 (C.I. Pigment Red 254) from Ciba Speciality Chemicals. ^{d} Silvet^{®} 790-20-E - refers to Sparkle Silvet^{®} 790-20-E aluminum flake in polyolefin carrier from Silberline (80 wt% aluminum flake in carrier). ^{e} E88470-79 - refers to a melt compounded blend comprised of 20wt% yellow green pigment 36 supplied by Sun Chemical 80wt% Nucrel^{™} 960 acid copolymer resin sold by DuPont. ^{f} E88470-63 - refers to a melt compounded blend comprised of 20wt% pigment dark green 7 supplied by Sun Chemical 80wt% Nucrel^{™} 960 acid copolymer resin sold by DuPont. ⁹ E88470-102/103 - refers to a melt compounded blend comprised of 30wt% TiPure™ R706 titanium dioxide pigment sold by DuPont 70wt% Nucrel^{™} 960 acid copolymer resin sold by DuPont. ^{h} PE8-THE-17960 - is a supplied blend of 50 wt% carbon black and 50 wt% carrier - polyethylene. | | | | | | | |

The A layer in all cases was Exact^{®} 8201 an 1.1 MI, 0.882 g/cm³ density of an ethylene octene copolymer from Exxon Mobile Chemical Corporation.

The run conditions for the three layer extrusion are given in following Table 3. The A layer was fed from a 44mm (1¾") diameter single screw extruder with a screw length to screw diameter (UD) ratio of 24/1. The extruder was built by NRM. The B layer was fed from a 25mm (1 ") diameter single screw extruder with a 30/1 UD ratio. The extruder was built by the Davis Standard Company. The C layer was fed from a 32mm (1¼") diameter single screw extruder with an I30/1 UD ratio. The extruder was built by Wayne Machine and Die. The three extruders fed into a 203mm (8") wide vane die fitted with an AA-B-CC selector plug. The vane die and selector plug were sold by The Cloeren Company.

The molten three layer co-extrusion exiting the die was quenched between a 203mm (8") diameter chrome casting roll and an 127mm (5") diameter nip roll. Both casting and nip roll were cored for water cooling. The quenched and polished sheet was wound up on 76mm (3") diameter paper cores. The casting and winding unit was built by Killion-David Standard. Runs U8V-24 and U8V-26 were quenched with the nip open. Runs UV8-25, UV8-27 and UV8-28 were quenched with the nip closed.

**Table 3 - Three layer sheet casting conditions**

| | Die | Width | 8" (203m) | **Film Die Lip Gap** 1.14 mm (0.045") | | | | | | | | | |
|---|---|---|---|---|---|---|---|---|---|---|---|---|---|
| **Extruder** | **A / B /** | | **A / B / C** | | **A / B / C** | | | **A / B / C** | | | **A / B / C** | | |
| **Example #** | U8V-24 | | U8V-25 | | | U8V-26 | | | U8V-27 | | | U8V-28 | |

| **25.4-19 mm (1-3/4") NRM - "A" Extruder** **Conditions** | | | | **Tie/Backing Layer Exxon** **Exact 8201** | | | | | | | | | |
|---|---|---|---|---|---|---|---|---|---|---|---|---|---|
| | **Temp Set** | **Temp Act** | **Temp Set** | **Temp Act** | | **Temp Set** | **Temp Act** | | **Temp Set** | **Temp Act** | | **Temp Set** | **Temp Act** |
| **Barrel Zone 1** | 170 | 190 | 170 | 190 | | 170 | 190 | | 190 | 190 | | 190 | 190 |
| **Barrel Zone 2** | 180 | 235 | 180 | 235 | | 180 | 235 | | 235 | 235 | | 235 | 235 |
| **Barrel Zone 3** | 180 | 240 | 180 | 240 | | 180 | 240 | | 240 | 240 | | 240 | 240 |
| **Adaptor** | 180 | 240 | 180 | 240 | | 180 | 240 | | 240 | 240 | | 240 | 240 |
| **Filter Flange** | 180 | 240 | 180 | 240 | | 180 | 240 | | 240 | 240 | | 240 | 240 |
| **Transfer Line** 180 | 180 | 240 | 180 | 240 | | 180 | 240 | | 240 | 240 | | 240 | 240 |
| **Adaptor Melt Temp.** | 254 | | 253 | | | 253 | | | 253 | | | 253 | |
| **Filter Melt Temp.** | 230 | | 230 | | | 230 | | | 230 | | | 230 | |
| **Filter - Pressure (PSI)** **MPa** | (2410) 16.6 | | (2415) 16.6 | | | (2375) 16.4 | | | (2350) 16.2 | | | (2345) 16.2 | |
| **Adaptor - Pressure (PSI)** **MPa** | (1900) 13.1 | | (1900) 13.1 | | | (1900) 13.1 | | | (1900) 13.1 | | | (1900) 13.1 | |
| **Screw R.P.M.** | 14.3 | | 14.6 | | | 14.5 | | | 14.5 | | | 14.5 | |
| **Screw Amps** | 30.5 | | 30.5 | | | 30.8 | | | 29.9 | | | 30 | |

| **25.4 mm (1") Killion - "B" Extruder Conditions** **Color** | | | **Ionomer** | **Layer** | | | | | | | | | |
|---|---|---|---|---|---|---|---|---|---|---|---|---|---|
| | **Temp Set** | **Temp Act** | **Temp Set** | **Temp Act** | | **Temp Set** | **Temp Act** | | **Temp Set** | **Temp Act** | | **Temp Set** | **Temp Act** |
| **Barrel Zone 2** | 230 | 229 | 230 | 229 | | 230 | 229 | | 230 | 229 | | 230 | 229 |
| **Barrel Zone 3** | 240 | 240 | 240 | 240 | | 240 | 240 | | 240 | 240 | | 240 | 240 |
| **Barrel Zone 4** | 240 | 240 | 240 | 240 | | 240 | 240 | | 240 | 240 | | 240 | 240 |
| **Adaptor** | 240 | 240 | 240 | 240 | | 240 | 240 | | 240 | 240 | | 240 | 240 |
| **Transfer Line** | 240 | 240 | 240 | 240 | | 240 | 240 | | 240 | 240 | | 240 | 240 |
| **Filter Melt Temp.** | 234 | | 234 | | | 236 | | | 236 | | | 237 | |
| **Filter - Pressure (PSI) MPa** | (1640) 11.3 | | (1300) 8.9 | | | (1845) 12.7 | | | (1690) 11.6 | | | (1800) 12.4 | |
| **% Motor Load** | 20% | | 20% | | | 28% | | | 22% | | | 24% | |
| **Screw R.P.M.** | 68 | | 80 | | | 80 | | | 80 | | | 80.5 | |
| **Screw Amps** | 7.1 | | 11.3 | | | 7.7 | | | 7.5 | | | 7.6 | |

| **25.4-6.4 mm (I-1/4") Wayne - "C" Extruder Conditions - Clear** | | | | **Ionomer** | | **Top** | **Layer** | | | | | | |
|---|---|---|---|---|---|---|---|---|---|---|---|---|---|
| | **Temp Set** | **Temp Act** | **Temp Set** | **Temp Act** | | **Temp Set** | **Temp Act** | | **Temp Set** | **Temp Act** | | **Temp Set** | **Temp Act** |
| **Barrel Zone 1** | 190 | 190 | 190 | 190 | | 190 | 190 | | 190 | 190 | | 190 | 190 |
| **Barrel Zone 2** | 230 | 230 | 230 | 230 | | 230 | 230 | | 230 | 230 | | 230 | 230 |
| **Barrel Zone 3** | 240 | 241 | 240 | 241 | | 240 | 241 | | 240 | 241 | | 240 | 241 |
| **Barrel Zone 4** | 240 | 240 | 240 | 240 | | 240 | 240 | | 240 | 240 | | 240 | 240 |
| **Clamp** | 240 | 240 | 240 | 240 | | 240 | 240 | | 240 | 240 | | 240 | 240 |
| **Adaptor** | 240 | 240 | 240 | 240 | | 240 | 240 | | 240 | 240 | | 240 | 240 |
| **Transfer Line** | 240 | 240 | 240 | 240 | | 240 | 240 | | 240 | 240 | | 240 | 240 |
| **Filter Melt Temp.** | 229 | | 243 | | | 229 | | | 229 | | | 229 | |
| **Adaptor Melt Temp.** | 243 | | 249 | | | 243 | | | 243 | | | 243 | |
| **Filter - Pressure (PSI)** **MPa** | (690) 4.8 | | (670) 4.6 | | | (690) 4.8 | | | (670) 4.6 | | | (680) 4.7 | |
| **Adaptor - Pressure (PSI)** **MPa** | (530) 3.7 | | (500) 3.4 | | | (520) 3.6 | | | (500) 3.4 | | | (520) 3.6 | |
| **Screw R.P.M.** | 15 | | 15 | | | 15 | | | 15 | | | 15 | |
| **Screw Amps** | 2.3 | | 2.3 | | | 2.3 | | | 2.2 | | | 2.2 | |

| **Cloeren Vane Die contact with** | **Note: C Layer is in casting roll.** | | | | | | | | | | | | |
|---|---|---|---|---|---|---|---|---|---|---|---|---|---|
| | **Temp Set** | **Temp Act** | **Temp Set** | **Temp Act** | | **Temp Set** | **Temp Act** | | **Temp Set** | **Temp Act** | | **Temp Set** | **Temp Act** |
| **Back** | 210 | 210 | 210 | 210 | | 210 | 210 | | 210 | 210 | | 210 | 210 |
| **Left End Flange** | 220 | 220 | 220 | 220 | | 220 | 220 | | 220 | 220 | | 220 | 220 |
| **Front** | 210 | 210 | 210 | 210 | | 210 | 210 | | 210 | 210 | | 210 | 210 |
| **Right End Flange** | 220 | 220 | 220 | 220 | | 220 | 220 | | 220 | 220 | | 220 | 220 |
| **CASTING UNIT** | | | | | | | | | | | | | |
| **Casting Roll - F.P.M.** | 6.7 | | 6.6 | | | 6.6 | | | 6.2 | | | 6.2 | |
| **Haul Off Roll (multiplier)** | 1.03 | | 1.03 | | | 1.03 | | | 1.03 | | | 1.03 | |
| **Bowed Roll (multiplier)** | 1 | | 1 | | | 1 | | | 1 | | | 1 | |
| **Casting Roll Nip (PSI)** **MPa** | n/a | | (20) 0.14 | | | n/a | | | (30) 0.55 | | | (50) 0.34 | |
| **Film Gauge (mm)** | 0.7 | | 0.8 | | | 0.8 | | | 0.749 | | | 0.798 | |
| **Layflat (in)** **cm** | (7) 17.8 | | (7.125) 18.1 | | | (7) 17.8 | | | (7.125) 18.1 | | | (7.125) 18.1 | |
| **Total Thru-put (g/min)** | 227.0 | | 258.0 | | | 248.0 | | | 243.0 | | | 244.0 | |
| **Total Thru-put (lb/hr)** **kg/hr** | (30.0) 13.6 | | (34.1) 15.5 | | | (32.7) 14.8 | | | (32.1) 14.6 | | | (32.1) 14.6 | |
| **H2O Recirculation Unit** | | | | | | | | | | | | | |
| **Temperature Set/Act** | 90 | 90 | 80 | 80 | | 80 | 80 | | 80 | 80 | | 100 | 100 |

The bond strength between the tie/backing layer and the colored ionomer layer was measured by t-peel (ASTM D1876) where one jaw was stationary and the other jaw was moving at a constant separating speed of 30.5cm (12") min with a 2.5 cm (1") wide test strip. The seal strength test results on the sheet samples were

| SAMPLE (color) | PEEL STRENGTH kg/cm (lbf/in) |
|---|---|
| 8UV2-24 Metallic Grey | 1.10 (6.2) |
| 8UV2-25 Light Grey | 1.08 (6.1) |
| 8UV2-26 Red | 1.06 (6.0) |
| 8UV2-27 Metallic Dark Green | 1.10 (6.2) |
| 8UV2-28 Black | 1.06 (6.0) |

From the nominally 0.7 to 0.8mm thick sheet samples, five sided shapes were cut out of the sheet for back-cladding in a .32cm (1/8") thick plaque mold where the rectangular portion was nominally 10cm (4") wide by 12.7 cm (5") high. The plaque mold was edge gated at the top. The sheet samples were fixed into the moving side of the mold using two sided tape. The red boxes in the sketch indicate locations of the tape. The clear coat layer of the sheet was held against the polished surface of the mold.

An180 tonne Nissei injection molding machine was used to backclad the sheet with AtoFina Petrochemicals 3289M a 1.8 MFI 0.905 density homopolymer polypropylene.

The injection molding back-cladding conditions are summarized in Table 4.

**Table 4 Injection Molding Back-Cladding Conditions**

| | |
|---|---|
| 180°C for the rear, 205°C mid, 200°C front and 200°C nozzle, 205°C melt The inject speed slow to moderate. | |
| Timers | 20 second inject time, followed by 20 second cool. 1 Second cycle start. |
| Mould Clamp | Clamp velocity 20%, slow velocity 15%, low pressure 15%, high pressure 100% |
| Mould Open | slow velocity 20, open velocity 30, |
| Eject | Forward velocity 10%, |
| Mould Temp | Core 38°C, Cavity 38°C |
| Injection Velocity | V3 5%, V2 9%, V1 9%, VS 50% |
| Locations | S2 8 mm, S1 18 mm, SM 32 mm, SD 2.0 mm |
| Inject Pressure | P3 30%, P2 30%, P1 30%, |

From the injection cladded part, 25 mm (1") wide by 12.5 cm (5") long strips were cut out for t-peel testing to measure the strength of the adhesion between the polypropylene cladded layer and the polyolefin backing layer on the coextruded sheet. The Cross head speed on the instron testing machine was 30.5 cm (12") min. In Table 5 below the maximum peel strength is reported (average of four or three peels).

**Table 5 - Peel Strength between polypropylene cladded layer and three layer sheet.**

| SAMPLE (color) | PEEL STRENGTH kg/cm (lbf/in) |
|---|---|
| 8UV2-24 Metallic Grey | 3.30 (18.6) |
| 8UV2-25 Light Grey | 2.90 (16.4) |
| 8UV2-26 Red | 3.66 (20.7) |
| 8UV2-27 Metallic Dark Green | 3.98 (22.5) |
| 8UV2-28 Black | 5.17 (29.2) |

These three layer co-extruded example films comprised of clear ionomer layer, colored ionomer layer and m-VLDPE tie/backing layer illustrate that a m-VLDPE can function as an adhesive layer providing good adhesion to an adjacent ionomer layer during co-extrusion and then subsequently provide good adhesion to a polypropylene layer that is injection cladded onto the surface of the m-VLDPE layer..

## Claims

1. A multi-layer sheet comprising or produced from
a. a first co-extruded clear polymeric layer comprising an ionomer resin of a copolymer of ethylene and 8 - 25% by weight, based on the weight of the copolymer, of a C₃-C₈ α,β ethylenically unsaturated monocarboxylic acid, wherein at least 35% of the acid moieties are neutralized with metal ions;
b. optionally, a second co-extruded polymeric layer selected from the group of an ionomer resin, an ethylene acid copolymer, an ethylene copolymer, an ethylene acid terpolymer, or a metallocene catalyzed very low density polyethylene, or combinations of two or more thereof; and
c. another co-extruded polymeric adhesive layer comprising a metallocene catalyzed very low density polyethylene;
wherein at least one of the second co-extruded polymeric layer and the polymeric adhesive layer comprising the metallocene catalyzed very low density polyethylene contains one or more additives selected from the group consisting of pigments, dyes and flakes.

2. A multi-layer sheet according to claim 1 further comprising, or produced from
d. a co-extruded thermoformable backing layer, adhered to the adhesive layer, of polypropylene, polymeric mixtures of polypropylene and another polyolefin, random copolymers of polypropylene.

3. A multi-layer sheet according to claim 1, or 2 wherein the first layer contains UV stabilizers and UV absorbers in amounts of 0.5 to 3.0 parts per hundred parts of ionomer resin.

4. A multi-layer sheet according to claim 3 wherein the first co-extruded layer consists essentially of an ionomer resin of ethylene and 10-25%, by weight, based on the weight of the copolymer, of methacrylic acid or acrylic acid; and 35-75% of the acid is neutralized with metallic ion selected from the group consisting of sodium, zinc, lithium, magnesium, calcium and any mixtures thereof; and has a Melt Index of 0.4 - 4.0; and preferably the copolymer comprises 12-18% by weight of acrylic acid, which is neutralized with sodium, zinc, or both.

5. A multi-layer sheet according to any of claim 1 to 4 wherein the second co-extruded polymer layer comprises an ionomer resin or an ethylene acid copolymer or an ethylene acid terpolymer or all mixtures of two or more thereof processible and adherable to the ionomer resin of the first co-extruded layer and contains pigments, dyes, flakes and any mixtures thereof.

6. A multi-layer sheet according to claim 1 wherein the first co-extruded polymeric layer is a clear layer and consists essentially of an ionomer resin of ethylene and 12-18% by weight, based on the weight of the copolymer, of methacrylic acid or 10-15% by weight, based on the weight of the copolymer, of acrylic acid and 35-75% neutralized with metallic ion selected from the group consisting of sodium, zinc, lithium, magnesium, calcium and any mixtures thereof and the second co-extruded polymeric layer consists essentially of said ionomer resin neutralized with metal ions and contains pigments, dyes, flakes and mixtures thereof and co-extruded third polymeric layer comprises a metallocene catalyzed very low density polyethylene adhered to a backing layer and the fourth co-extruded backing layer comprises a random copolymer of polypropylene.

7. An auto part, a truck part, an auto or truck body panel, or a part or panel of a recreational vehicle having a Class A surface comprising the multi-layer sheet of any of claims 1 to 6.

## Patentansprüche

1. Mehrlagige Folie, die aufweist oder erzeugt wird aus
a. einer ersten coextrudierten durchsichtigen Polymerlage, die ein Ionomerharz aus einem Copolymer von Ethylen und 8 - 25 Gew.-%, bezogen auf die Masse des Copolymers, einer α,β-ethylenisch ungesättigten C₃-C₈-Monocarbonsäure aufweist, wobei mindestens 35% der Säurekomponenten mit Metallionen neutralisiert sind;
b. wahlweise einer zweiten coextrudierten Polymerlage, die aus der Gruppe ausgewählt ist, die aus einem Ionomerharz, einem Ethylen-Säure-Copolymer, einem Ethylen-Copolymer, einem Ethylen-Säure-Terpolymer oder einem metallocen-katalysierten Polyethylen mit sehr niedriger Dichte oder Kombinationen von zwei oder mehreren dieser Verbindungen besteht; und
c. einer weiteren coextrudierten polymeren Klebstoffschicht, die ein metallocen-katalysiertes Polyethylen mit sehr niedriger Dichte aufweist;
wobei mindestens eine von der zweiten coextrudierten Polymerlage und der polymeren Klebstoffschicht mit dem metallocen-katalysierten Polyethylen mit sehr niedriger Dichte einen oder mehrere Zusatzstoffe enthält, die aus der Gruppe ausgewählt sind, die aus Pigmenten, Farbstoffen und Flocken besteht.

2. Mehrlagige Folie nach Anspruch 1, die ferner aufweist oder erzeugt wird aus
d. einer coextrudierten thermoformbaren Trägerschicht, an der Klebstoffschicht haftend, aus Polypropylen, Polymergemischen aus Polypropylen und einem anderen Polyolefin, statistischen Copolymeren von Polypropylen.

3. Mehrlagige Folie nach Anspruch 1 oder 2, wobei die erste Lage UV-Stabilisatoren und UV-Absorber in Anteilen von 0,5 bis 3,0 Teilen pro hundert Teile Ionomerharz enthält.

4. Mehrlagige Folie nach Anspruch 3, wobei die erste coextrudierte Lage im wesentlichen aus einem Ionomerharz aus Ethylen und 10-25 Gew.-%, bezogen auf die Masse des Copolymers, Methacrylsäure oder Acrylsäure besteht und 35-75% der Säure mit einem Metallion neutralisiert sind, das aus der Gruppe ausgewählt ist, die aus Natrium, Zink, Lithium, Magnesium, Calcium und irgendwelchen Gemischen daraus besteht; und einen Schmelzindex von 0,4-4,0 aufweist; und
das Copolymer vorzugsweise 12-18 Gew.-% Acrylsäure aufweist, die mit Natrium, Zink oder beiden neutralisiert ist.

5. Mehrlagige Folie nach einem der Ansprüche 1 bis 4, wobei die zweite coextrudierte Polymerlage ein Ionomerharz oder ein Ethylen-Säure-Copolymer oder ein Ethylen-Säure-Terpolymer oder alle Gemische aus zwei oder mehreren dieser Verbindungen aufweist, das verarbeitbar und an dem Ionomerharz der ersten coextrudierten Lage haftfähig ist und Pigmente, Farbstoffe, Flocken und irgendwelche Gemische daraus enthält.

6. Mehrlagige Folie nach Anspruch 1, wobei die erste coextrudierte Polymerlage eine durchsichtige Lage ist und im wesentlichen aus einem Ionomerharz aus Ethylen und 12-18 Gew.-% Methacrylsäure, bezogen auf die Masse des Copolymers, oder 10-15 Gew.-% Acrylsäure, bezogen auf die Masse des Copolymers, besteht, und zu 35-37% mit einem Metallion neutralisiert sind, das aus der Gruppe ausgewählt ist, die aus Natrium, Zink, Lithium, Magnesium, Calcium und irgendwelchen Gemischen daraus besteht, und wobei die zweite coextrudierte Polymerlage im wesentlichen aus dem mit Metallionen neutralisierten Ionomerharz besteht und Pigmente, Farbstoffe, Flocken und Gemische daraus enthält, und die dritte coextrudierte Polymerlage ein metallocen-katalysiertes Polyethylen mit sehr niedriger Dichte aufweist, das an einer Trägerschicht haftet, und die vierte coextrudierte Trägerschicht ein statistisches Copolymer von Polypropylen aufweist.

7. Autoteil, LKW-Teil, Auto- oder LKW-Karosseriebauteil oder Teil oder Bauteil eines Freizeitfahrzeugs mit einer Oberfläche der Klasse A, die eine mehrlagige Folie nach einem der Ansprüche 1 bis 6 aufweist.

## Revendications

1. Feuille multicouche comprenant ou produite à partir de
a. une première couche polymère claire coextrudée comprenant une résine ionomère d'un copolymère d'éthylène et 8 à 25% en poids, basé sur le poids du copolymère, d'un acide monocarboxylique en C₃ à C₈ α,β éthyléniquement insaturé, dans laquelle au moins 35% des fragments acide sont neutralisés avec des ions métalliques ;
b. facultativement, une deuxième couche polymère coextrudée choisie parmi le groupe d'une résine ionomère, un copolymère acide d'éthylène, un copolymère d'éthylène, un terpolymère acide d'éthylène, ou un polyéthylène à très faible masse volumique catalysé par métallocène, ou les combinaisons de deux ou plusieurs de ceux-ci ; et
c. une autre couche adhésive polymère coextrudée comprenant un polyéthylène à très faible masse volumique catalysé par métallocène ;
dans laquelle au moins une de la deuxième couche polymère coextrudée et de la couche adhésive polymère comprenant le polyéthylène à très faible masse volumique catalysé par métallocène contient un ou plusieurs additifs choisis dans le groupe constitué de pigments, teintures et paillettes.

2. Feuille multicouche selon la revendication 1, comprenant en outre, ou produite à partir de
d. une couche de soutien thermoformable coextrudée, collés à la couche adhésive, de polypropylène, mélanges polymères de polypropylène et d'une autre polyoléfine, copolymères aléatoires de polypropylène.

3. Feuille multicouche selon la revendication 1 ou 2, dans laquelle la première couche contient des agents stabilisants aux UV et des absorbeurs UV en des quantités de 0,5 à 3,0 parties par cent parties de résine ionomère.

4. Feuille multicouche selon la revendication 3, dans laquelle la première couche coextrudée est constituée sensiblement de résine ionomère d'éthylène et de 10 à 25% en poids, basé sur le poids du copolymère, d'acide méthacrylique ou d'acide acrylique ; et 35 à 75% de l'acide est neutralisé avec un ion métallique choisi dans le groupe constitué de sodium, zinc, lithium, magnésium, calcium et n'importe lesquels de leurs mélanges ; et a un indice de fusion de 0,4 à 4,0 ; et de préférence le copolymère comprend 12 à 18% en poids d'acide acrylique, qui est neutralisé avec du sodium, du zinc, ou l'un et l'autre.

5. Feuille multicouche selon l'une quelconque des revendications 1 à 4, dans laquelle la deuxième couche polymère coextrudée comprend une résine ionomère ou un copolymère acide d'éthylène ou un terpolymère acide d'éthylène ou tous les mélanges de deux ou plusieurs de ceux-ci pouvant être traité et mis en adhésion à la résine ionomère de la première couche coextrudée et contient des pigments, des teintures, des paillettes et n'importe lequel de leurs mélanges.

6. Feuille multicouche selon la revendication 1, dans laquelle la première couche polymère coextrudée est une couche claire et est constituée sensiblement de résine ionomère d'éthylène et de 12 à 18% en poids, basé sur le poids du copolymère, d'acide méthacrylique ou 10 à 15% en poids, basé sur le poids du copolymère, d'acide acrylique et 35 à 75% neutralisé avec un ion métallique choisi dans le groupe constitué de sodium, zinc, lithium, magnésium, calcium et n'importe lesquels de leurs mélanges et la deuxième couche polymère coextrudée est constituée sensiblement de ladite résine ionomère neutralisée avec des ions métalliques et contient des pigments, des teintures, des paillettes et leurs mélanges et la troisième couche polymère coextrudée comprend un polyéthylène à très faible masse volumique catalysé par métallocène mis en adhésion à une couche de soutien et la quatrième couche de soutien coextrudée comprend un copolymère aléatoire de polypropylène.

7. Pièce d'automobile, pièce de camion, panneau de carrosserie d'automobile ou de camion, ou partie d'un panneau d'un véhicule de loisirs ayant une surface de Classe A comprenant la feuille multicouche selon l'une quelconque des revendications 1 à 6.
